# EUROPEAN PATENT SPECIFICATION

(11) **EP 0 426 904 B1**
(45) Date of publication and mention of the grant of the patent: **17.05.1995**
(21) Application number: 89202791.3
(22) Date of filing: 06.11.1989
(51) Int. Cl.: B05D 5/08, B05C 9/14, B05D 3/06, B05D 7/24, B63B 59/04, C09D 5/16

(54) **Method for applying a coating to a substrate**
Verfahren zum Aufbringen einer Beschichtung auf eine Unterlage
Procédé d'application d'un revêtement sur un substrat

(43) Date of publication of application: 15.05.1991
(60) Divisional application: 94201445.7
(73) Proprietor: DUNFRIES INVESTMENTS LIMITED, St. Helier, Jersey, Channel Islands (GB)
(72) Inventor: Poullos, Mark Peter, Dallas, Texas 75220 (US)
(74) Representative: Flamman, Han

(56) References cited:
- EP-A- 0 168 105
- EP-A- 0 202 803
- EP-A- 0 235 380
- EP-A- 0 330 237
- DE-A- 2 651 946
- DE-A- 3 004 497
- FR-A- 2 157 074
- GB-A- 2 210 291
- US-A- 4 297 394
- US-A- 4 411 931
- CHEMICAL ABSTRACTS, vol. 80, no. 6, abstract no. 28546h, Columbus, Ohio, US;& JP-A-47 029 430
- WORLD PATENTS' INDEX LATEST, week 23, 1989, D. class A82,G02,A14, Acc. no.170539, Derwent Publications Ltd, London, GB; &JP-A-01 113 415
- WORLD PATENTS' INDEX LATEST, week 17, 1989, D.class A82,C03,A14,P14, Acc. no.125904, Derwent Publications Ltd, London, GB; & JP-A-01 071 426
- WORLD PATENTS' INDEX LATEST, week 24, 1986, D.class A82,G02,A14,Q24, Acc. no.153463, Derwent Publications Ltd, London, GB; & JP-A-61 087 764
- WORLD PATENTS' INDEX LATEST, week 39, 1989, D. Class A82,E36,F06,G02,A17,A25,Acc. no. 282520, Derwent Publications Ltd, London, GB; & JP-A-01 207 213
- CHEMICAL ABSTRACTS, vol. 91, no. 4, abstract no. 22504y, Columbus, Ohio, US; Y.V. GNUSOV: "Fluoroplastic coating for ship protection from overgrowth (bymarine organisms)"
- WORLD PATENTS' INDEX, week 45, 1978, D. class A97,C03,A14,Q24, Ass. no. 80901A,Derwent Publications Ltd, London, GB; & JP-A-53 113 014
- CHEMICAL ABSTRACTS, vol. 105, no. 26, abstract no. 228596w, Columbus, Ohio, US;& JP-A-61 097 374

## Description

The invention relates to a method for applying a coating consisting of polymerized fluorocarbon material to a substrate, in particular the outer surfaces of ships' hulls in order to protect them from fouling by exposure to marine organisms in a submerged aquatic environment. The coating is thermally fused to the substrate, as the case may be, after spraying it onto the substrate.

Polymerized fluorocarbon materials which in particular are suited to serve as coating materials in the said sense are materials of the groups constituted by PFE (polyfluoraethers), FEP (fluorinated ethylene propylene), CTFE (chlorotrifluoroethylene), TFE (tetrafluoroethylene), ETFE (ethylenetrifluoroethylene) and PVE (polyvinylfluoride).

Such coatings and methods to apply them, are known from for instance the US patent no. 4,297,394 and the French patent no. 2.157.074.

These fluorocarbon materials are highly hydrophobic, thus repelling the fouling organisms and preventing them to get hold on the coating. Other advantages are their extremely smooth and non-stick surface that has a very low coefficient of friction of about 0,02 maximizing the abrasion resistance and the aqueous slip (ability of a vessel to glide through the water) and their corrosion resistance. Thermal fusing the fluorocarbons to the substrate has the advantage that the film as such can be without pinholes, so preventing mare organisms to attach themselves to the surface. The fluorocarbon material may, as the case may be electro-statically, be sprayed onto the substrate and then is thermally fused to the substrate. This is specially suited for very large surfaces in which it is very hard to obtain the desired temperature of the substrate needed.

The wavelengths of the coherent light source are to be compatible with both the fluorocarbon resin and the substrate material. In that way it is possible to heat both materials to practically the same temperature needed for fusing. The wavelength has to be adapted to the properties of both materials.

A polymerized fluorocarbon material which extremely well serves as a coating material in the said sense, is a material of the group constituted by PTFE. However, because of the high melting point of PTFE, so far it has not been possible to apply a PTFE-coating on a substrate, using the said fusing technique.

According to the invention a method is provided which yet makes it possible to apply the desired PTFE coating. That method is characterized in that the fluorocarbon material is PTFE and that the thermal fusing is obtained by employing a coherent form of radiation with wavelengths which are compatible with both the PTFE and the substrate material, concentrated in a small portion of the electromagnetic spectrum, the PTFE resin coating absorbing sufficient energy from the radiant laser beam to melt and, as the case may be, passing sufficient energy to heat the substrate at and near the joinder surface at approximately the same temperature, so as to bond the coating and the substrate interface. The heat needed to bond the substrate and the coating, thus is locally applied and the desired temperature may be reached thereby.

The invention also encompasses the method according to the invention by using a specific apparatus. It comprises as source of coherent light an infrared laser whose wavelength is greater than 1»m throwing its light, as the case may be via an optical system for correcting format and alignment of the beam, onto a first optical deflector which reflects a small percentage to a broad band InfraRed (IR) sensor, which accurately measures the realtime IR laser power, generating a analogue or digital signal and is connected to an analogue-to-digital interface circuit on one hand linked to the central processing terminal and on the other hand to the laser power supply, locking the said laser power supply to the value specified by said central processing terminal, whereas the remaining part of the beam passes through a second optical deflector via a Y-scanner mirror and an X-scanner mirror for correct positioning of the beam during raster scanning, optical scanning correctors for keeping the beam focussed to a consisted size and angle with respect to the substrate, an IR feedback sensor receiving the IR radiation reflected from the heated substrate via the optical scanning correctors the X-scanner mirror, the Y-scanner mirror, the second optical deflector, the first optical deflector and the mirror, said IR feedback sensor generating an analogue or digital signal, being connected to another input of the analogue-to-digital interface circuit for realtime processing to correctly manage the sweep rate of the fastest moving axis (X or Y) and/or manipulate laser-power when one or the other parameter limit has been approached, a telemetry measuring sensor, connected with its output to a third input of the analogue-to-digital interface circuit, receiving its signal from the substrate through the optical scanning correctors, the X-scanner mirror, the Y-scanner mirror and the second deflector for distance measurements to be accurately made in real time, as the laser beam sweeps across the surface, an IR camera receiving an IR picture of the substrate and being connected with an IR thermal image processor, which is linked to a fourth input of the analogue-to-digital interface circuit. The advantage of the system used in this apparatus is that realtime monitoring sensors are used to selectively control the infrared thermal process. This is accomplished by controlling the energy distribution precisely and accurately over the material to be irradiated, employing selective realtime thermal detectors that feed information to computerized electronics, which in turn control the power distribution such that the heating of a localized area can be precisely varied in accordance with the needs of the irradiated material. Moreover the telemetry control devices manage the optical system such that the beam spot profile remains uniform over a changing surface contour. This can be accomplished by many methods, the most preferred being a coherent light source system that monitors exact changes in the surface contour. Placing the telemetry measuring sensor in the optical path of the laser beam passed through the scanning optical correctors allows for distance measurements to be accurately made in realtime as the laser beam sweeps across the surface. Electronic signals are then sent back to the analogue-to-digital interface which in turn correctly focusses the optical scanning correctors for consistent optical focus onto the substrate. The central processing terminal then activates the shutter control circuits, which in turn open the IR laser shutters and initiates the IR laser. As the beam passes through the first optical deflector, a small percentage is reflected back to a broad band IR sensor which accurately measures realtime IR laser power. An analogue or digital signal is then generated and sent back to the analogue-to-digital conversion interface circuit where the laser power is locked into the value specified by the central processing terminal.

In an embodiment of the apparatus used in the method according to the invention, the telemetry measuring sensor is placed next to the optical scanning correctors for look-ahead surface profiling and storing the information in a memory, which may be incorporated in the analogue-to-digital interface circuit.

Thus look-ahead surface profiling can be done and the measurements stored in solid state memory and recalled as a scanning laser beam reaches these points.

In a further embodiment of the apparatus used in the method according to the invention, a carriage is present which can be moved along the substrate, having a plurality of elevator members which are interconnected by a truckframe platform, supporting the equipment necessary to carry out the previously mentioned methods.

This has the advantage that also very large objects as ships' hulls can be coated by the apparatus described above.

The invention will be illustrated by way of example, by the accompanying drawings in which
Fig.1 - shows a substrate, coated by a transparent film and bonded by laser radiation,
Fig.2 - shows a substrate on which a powdered coating is applied by electrostatically spraying and simultaneously heating both substrate and coating by laser radiation,
Fig.3 - shows a circuit for applying laser radiation to the substrate and the coating, in which realtime surface profiling is used, and
Fig.4 - a similar circuit, in which look-ahead surface profiling is performed,
Fig.5 - an apparatus wherein the laser is arranged on a vehicle.

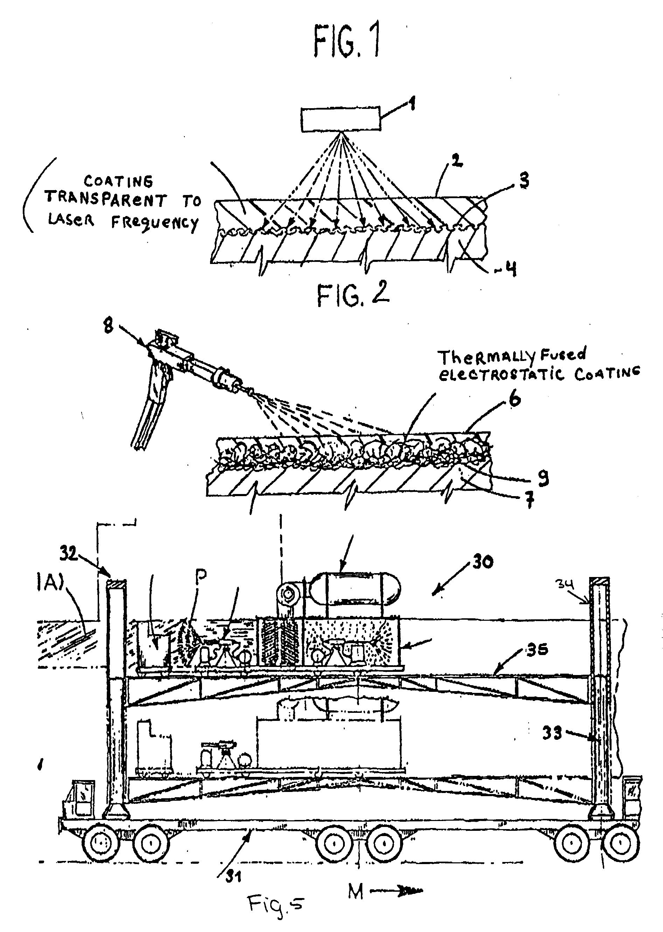

In Fig.1 a CO₂ laser 1 throws its coherent light beam onto the preformed PTFE film 2. This light beam 5 passes through the film 2 to the substrate 4 and in so doing substantially heats the substrate and the interface 3 of the transparent film 2 and substrate 4, so that the materials on each side of the interface are heated to their desired temperatures and fuse together and upon cooling the interface becomes an integral bond that permanently joins the film 2 to the substrate 4 through the now fused layer 3.

A principal use of this method is to coat the surface of a ship's hull with a thin but durable film of PTFE that possesses an extremely smooth outer surface, which is pinhole free and has a very low water transmission rate and tenaciously clings to the ship's hull surface, so that in effect there is produced a low coefficient of friction surface that is integral with the hull, so as not to permit barnacles or other marine organisms to domicile or attach to the ship's hull and consequently, no fouling can occur, even during long periods of submersion of the hull in fresh or salt water, as would be encountered in rivers or oceans throughout the world.

Fig.2 shows how a thin coating 6 of PTFE in powdered form, by first spraying on the fine-powdered material through an electrostatic type of spray gun (not shown). The PTFE is fluidized in a porous bed power feed hopper and is delivered to the electrostatic spray gun in controllable volume and velocities. As the powder passes through the gun nozzle and is sprayed, it becomes electrically charged and is attracted to the grounded substrate (a ship's hull, for example) in an evenly distributed manner. The sprayed-on powder is then cured by the application of heat, or more preferably, by the application of coherent laser radiation supplied by the laser 8 that is of a wavelength or balanced wavelength, to penetrate the PTFE surface with a calculated percentage absorbed in the PTFE and the rest penetrating to the substrate 7 with enough remaining energy to fuse the PTFE layer 6 and the adjacent substrate 7 at their interface 9.

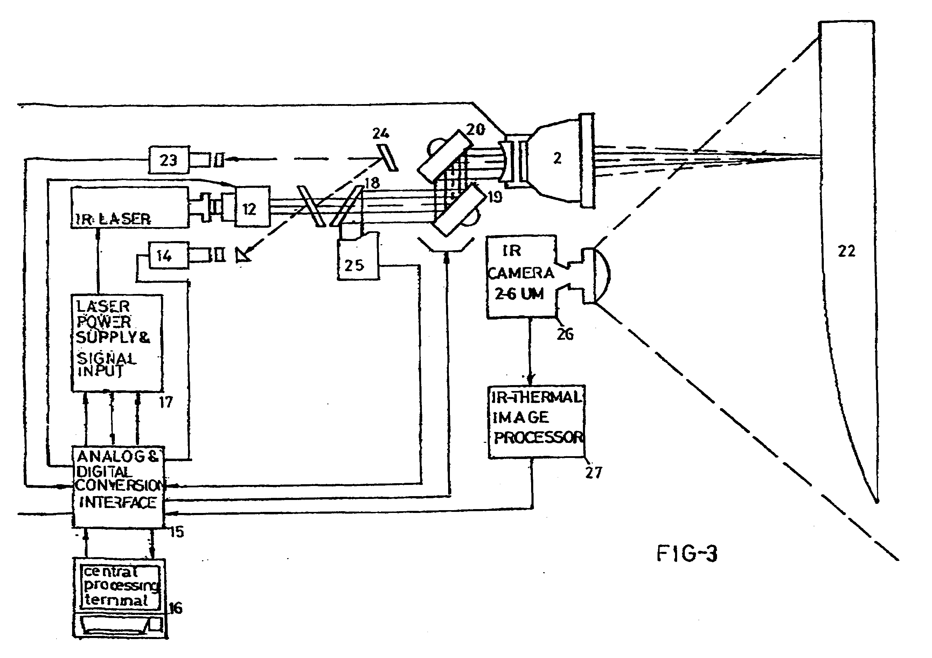

Fig.3 shows a circuit diagram of an apparatus for applying heat to the interface of a film or powder sprayed onto the hull of a ship, for example. This apparatus comprises an Infra-Red laser 11 throwing its light via an optical system 12 for correcting format and alignment of the beam onto a first optical deflector 13, which reflects a small percentage to a broad band IR sensor 14, which accurately measures the real time IR laser power, generating an analogue or digital signal and is connected to an analogue-to-digital interface circuit 15, on one hand linked to the central processing terminal 16 and on the other hand to the laser power supply 17 locking said laser power supply 17 to the value specified by said central processing terminal 16, whereas the remaining part of the beam passes through a second deflector 18 via an Y-scanner mirror 19 and an X-scanner mirror 20 for correct positioning of the beam during raster scanning, optical scanning correctors 21 for keeping the beam focussed to a consistent size and angle with respect to the substrate 22. The substrate 22 elevates in temperature, which in turn emits IR radiation, which is proportional to its current temperature. An IR feedback sensor 23, receiving the IR radiation reflected from said heated substrate 22 via the optical scanning correctors 21, the X-scanner mirror 20, the Y-scanner mirror 19, the second optical deflector 18, the first optical deflector 13 and the mirror 24 said IR feedback sensor 23 generating an analogue or digital signal, being connected to another input of the analogue-to-digital interface circuit 15 for realtime processing to correctly manage the sweep rate of the fastest moving axis (X or Y) and/or manipulate laser power when one or the other parameter limit has been approached. A telemetry measuring sensor 25 connected with its output to a third input of the analogue-to-digital interface circuit, receives its signal from the substrate 22 to the optical scanning correctors 21, the X-scanner mirror 20, the Y-scanner mirror 19 and the second deflector 18 for distance measurements to be accurately made in realtime as the laser beam sweeps across the surface of the substrate 22, an IR camera receiving an IR picture of the substrate 22 and being connected with an IR thermal image processor 27, which is linked to a fourth input of the analogue-to-digital interface circuit 15. This circuit passes the data in the correct format to the central processor terminal 20 where software interprets the data and then modifies the other process parameters like for example the slowest moving scan axis (X or Y), dispersion spray thickness, dispersion spray temperature, laser power distribution throughout the system, pre-heat scan temperature, post-heat scan temperature, etc. The IR camera 26 and the IR thermal image processor 27 must be set for the correct emissivity value of the surface being treated, whereas the IR sensor 23 must be set to its own correct emissivity value based on its own optical path using the IR thermal image processor system 26 and 27 as a reference point. If pre-heat scanning is to be done, then the grating tuned laser 11 should have its defraction grating set for 10,6 »m wavelength. If post-heat scanning is to be done, then the grating tuned laser 11 should have its defraction grating set for a wavelength that will distribute the IR radiation between dispersion layer and substrate layer by riding the spectral transmission and absorption response curves of the dispersion layer. This in turn will allow a more equal and uniform temperature rise between coating and substrate.

The optical deflectors 13 and 18 have been specially made to be transparent to IR radiation wavelengths transmitted by the laser 11 for example 8,5 to 12 »m, whereas the second optical deflector 18 is reflective to substrate wavelengths (2 - 8,5 »m).

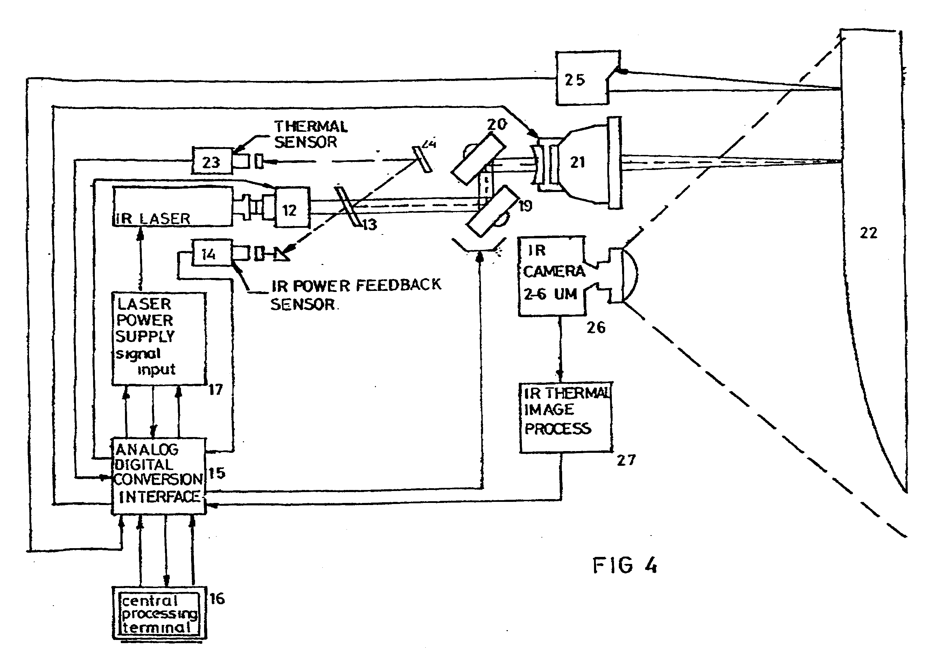

Fig.4 shows a circuit diagram of a similar apparatus, as described in Fig. 3, only the telemetry measuring sensor 25 is placed next to the optical scanning correctors 21 for look-ahead search profiling and storing the information in the memory which may be incorporated in the analogue-to-digital interface circuit 15. This information can later be recalled as the scanning laser beam reaches these points. In this apparatus the second optical deflector 18 can be dispensed with.

It has been found that with a CO or CO₂ laser, either superheterodyned or grating tuned on both with a wavelength between 4,98 »m and 12,7 »m or more preferred 7,0 »m to 12,7 »m coupled with an accurate thermal feedback and telemetry monitoring and control system, as described in Fig. 3 and Fig. 4, is capable of controlling the thermal processing of the PTFE with minimal effect to the substrate on the object being coated and that this system is also capable of compensating for the effects experienced with high power CO₂ lasers that have a multi-mode structure in the Far field, that normally cause disuniformity in thermal distribution that often renders exact and precise control useless in obtaining smooth thermal gradients and distribution. With this invention thermal distribution can be varied during the process by means of precision, power and optical adjustments.

Fig.5 shows an apparatus comprising a self-propelled vehicle 30 which can be moved along the substrate, having a very long flat bed 31 on which a superstructure 32 is mounted, having a plurality of elevator members 33 and 34, which are interconnected by a truckframe platform 35, supporting the equipment necessary to carry out the method according to the invention.

## Claims

1. Method for applying a coating to a substrate, in particular to the outer surface of ships hulls in order to protect them from fouling by exposure to marine organisms in a submerged aquatic environment, said coating, consisting of polymerized fluorocarbon material, it being thermally fused to the substrate as the case may be after spraying onto the substrate,
characterized in that the fluorocarbon material is PTFE (polytetrafluoroethylene) and that the thermal fusing is obtained by employing a coherent form of radiation, the wavelengths of which are compatible with both the PTFE and the substrate material, concentrated in a small portion of the electro-magnetic spectrum the PTFE resin coating absorbing sufficient energy from the radiant laser beam to melt and, as the case may be, passing sufficient energy to heat the substrate at and near the joinder surface to approximately the same temperature, so as to bond the coating and the substrate interface.

2. Method according to claim 1,
characterized in that it uses an apparatus which comprises as source of coherent light an infrared (IR) laser (11) whose wavelength is greater than 1»m throwing its light, as the case may be via an optical system (12) for correcting format and alignment of the beam, onto a first optical deflector (13), which reflects a small percentage to a broad band IR sensor (4), which accurately measures the realtime IR laser power, generating an analogue or digital signal and is connected to an analogue-to-digital interface circuit (15), on one hand linked to the central processing terminal (16) and on the other hand to the laser power supply (17), locking the said laser power supply (17) to the value specified by said central processing terminal (16), whereas the remaining part of the beam passes through a second deflector (18) via an Y-scanner mirror (19) and an X-scanner mirror (20) for correct positioning of the beam during raster scanning, optical scanning correctors (21) for keeping the beam focussed to a constant size and angle with respect to the substrate (22), an IR feedback sensor (23) receiving the IR radiation reflected from the heated substrate (22) via the optical scanning correctors (21), the X-scanner mirror (20), the Y-scanner mirror (19), the second optical deflector (18), the first optical deflector (13) and the mirror (24) said IR feedback sensor (23), generating an analogue or digital signal, being connected to another input of the analogue-to-digital interface circuit (15) for realtime processing to correctly manage the sweep rate of the fastest moving axis (X or Y) and/or manipulate laser power when one or the other parameter limit has been approached, a telemetry measuring sensor (25) connected with its output to a third input of the analogue-to-digital interface circuit (15) receiving its signal from the substrate (22) through the optical scanning correctors (21), the X-scanner mirror (20), the Y-scanner mirror (19) and the second deflector (18) for distance measurements to be accurately made in realtime, as the laser beam sweeps across the surface, an IR camera (26) receiving an IR picture of the substrate (22) and being connected with an IR thermal image processor (27) which is linked to a fourth input of the analogue-to-digital interface circuit (15).

3. Method according to claim 2,
characterized in that the telemetry measuring sensor (25) is placed next to the optical scanning correctors (21) for look-ahead surface profiling (28) and storing the information in a memory which may be incorporated in the analogue-to-digital interface circuit (15), whereas the second optical deflector (18) can be dispensed with.

4. Method according to claim 2 or 3,
characterized in that a self-propelled vehicle (30) is present which can be moved along the substrate, having a very long flat bed (31) on which a superstructure (32) is mounted having a plurality of elevator members (33, 34), which are interconnected by a truckframe platform (35) supporting the equipment necessary to carry out the method according to the invention.

## Patentansprüche

1. Verfahren zum Aufbringen einer Beschichtung auf eine Unterlage, insbesondere auf die Außenfläche von Schiffskörpern, mit dem Ziel, sie vor Bewuchs aufgrund der Bloßstellung durch Meeresorganismen in einer Umgebung unter Wasser zu schützen, besagte Beschichtung aus polymerisiertem Fluorkohlenstoff-Material besteht, mit der Unterlage thermisch verschmolzen ist, je nach Sachlage nachdem die Unterlage besprüht worden ist,
dadurch gekennzeichnet, daß das Fluorkohlenstoff-Material PTFE (Polytetrafluorethylen) ist und daß die thermische Verschmelzung durch die Anwendung einer kohärenten Form von Strahlung erreicht wird, wovon die Wellenlängen sowohl mit dem PTFE als auch dem Werkstoff der Unterlage kompatibel sind, konzentriert auf einen kleinen Bereich des elektromagnetischen Spektrums absorbiert die PTFE-Kunstharzbeschichtung von dem strahlenden Laserstrahl genügend Energie zum Schmelzen und, je nach Sachlage, um genügend Energie durchzulassen, um die Unterlage an und nahe der Verbindungsfläche auf ungefähr dieselbe Temperatur zu erwärmen, und so die Beschichtung und die Grenzfläche der Unterlage miteinander zu verbinden.

2. Verfahren gemäß Anspruch 1,
dadurch gekennzeichnet, daß eine Vorrichtung verwendet wird, die als Quelle für kohärentes Licht einen Infrarot- (IR)-Laser (11) einschließt, dessen Wellenlänge größer als 1 »m ist und der sein Licht, je nach Sachlage über ein optisches System (12) zur Korrektur des Formats und der Ausrichtung des Strahls, auf einen ersten optischen Deflektor (13) wirft, der einen kleinen Prozentsatz zu einem Breitband IR-Sensor (14) reflektiert, der die Echtzeit-Leistung des IR Laser genau mißt, ein analoges oder digitales Signal erzeugt und mit einer analog-digitalen Schnittstelle (15) verbunden ist, die einerseits mit dem zentralen Prozeß-Terminal (16) und andererseits mit der Speisung (17) für den Laser verbunden ist, die besagte Speisung (17) für den Laser auf den Wert begrenzt, der von dem besagten zentralen Prozeß-Terminal (16) spezifiziert wird, während der restliche Teil des Strahls durch einen zweiten Deflektor (18) über einen Y-Scanner Spiegel (19) und einen X-Scanner Spiegel (20) für die korrekte Positionierung des Strahls während der Raster-Abtastung passiert, ferner optische Abtast-Entzerrer (21), die dazu dienen, den Strahl auf eine konstante Größe und einen konstanten Winkel in Hinblick auf die Unterlage (22) zu fokussieren, einen IR-Rückkopplungs-Sensor (23), der die von der erwärmten Unterlage (22) reflektierte IR-Strahlung über die optischen Abtast-Entzerrer (21), den X-Scannerspiegel (20), den Y-Scannerspiegel (19), den zweiten optischen Deflektor (18), den ersten optischen Deflektor (13) und den Spiegel (24) empfängt, wobei der besagte IR-Rückkopplungs-Sensor (23), der ein analoges oder digitales Signal erzeugt, mit einem anderen Eingang der analog-digitalen Schnittstelle (15) verbunden ist, für die Echtzeit-Verarbeitung zur korrekten Steuerung der Sweeprate der am schnellsten bewegenden Achse (X oder Y) und/oder um die Laserleistung zu beeinflussen, wenn der Grenzwert für den einen oder anderen Parameter nähergekommen ist, ferner ein Datenfernübertragungs-Meßfühler (25), dessen Ausgang mit einem dritten Eingang der analog-digitalen Schnittstelle (15) verbunden ist, die ihr Signal von der Unterlage (22) durch die optischen Abtast-Entzerrer (21), den X-Scannerspiegel (20), den Y-Scannerspiegel (19) und den zweiten Deflektor (18) empfängt, damit Abstandsmessungen, während der Laserstrahl die Oberfläche abtastet, in Echtzeit genau durchgeführt werden, sowie eine IR-Kamera (26), die ein IR-Bild von der Unterlage (22) empfängt und mit einem IR-thermischen Bildübersetzer (27) verbunden ist, der mit einem vierten Eingang der analog-digitalen Schnittstelle (15) verbunden ist.

3. Verfahren gemäß Anspruch 2,
dadurch gekennzeichnet, daß der Datenfernübertragungs-Meßfühler (25) neben den optischen Abtast-Entzerrern (21) angebracht ist für die vorausschauende Oberflächen-Konturbestimmung (28) und zum Einspeichern der Information in einen Speicher, der ein Bestandteil der analog-digitalen Schnittstelle (15) sein kann, während auf den zweiten optischen Deflektor (18) verzichtet werden kann.

4. Verfahren gemäß Anspruch 2 oder 3,
dadurch gekennzeichnet, daß ein Fahrzeug mit Eigenantrieb (30) vorhanden ist, das entlang der Unterlage bewegt werden kann, welches eine sehr lange Tiefladefläche (31) hat, auf der ein Oberbau (32) befestigt ist, der eine Vielzahl Hebewerk-Elemente (33, 34) besitzt, die mit einer Transportwagen-Plattform (35) verbunden sind, die die für die Durchführung des Verfahrens gemäß der Erfindung benötigte Ausrüstung trägt.

## Revendications

1. Une méthode pour appliquer un revêtement sur un substrat, en particulier sur la surface extérieure de coques de bateaux, afin de les protéger de l'encrassement par exposition aux organismes marins dans un environnement aquatique submergé, ce revêtement consistant en un matériau de fluorocarbone polymérisé, celui-ci étant thermiquement fusionné avec le substrat selon le cas après vaporisation sur le substrat,
caractérisée en ce que le matériau de fluorocarbone est du PTFE (polytétrafluoroéthylène) et en ce que la fusion thermique est obtenue en employant une forme cohérente de rayonnement, dont les longueurs d'ondes sont compatibles à la fois avec le PTFE et le matériau du substrat, concentrées dans une petite partie du spectre électromagnétique, le revêtement en résine de PTFE absorbant suffisamment d'énergie du rayon laser radiant pour fondre et, selon le cas, transmettre suffisamment d'énergie pour chauffer le substrat à la surface de jonction et à côté à la même température environ, de façon à lier le revêtement et l'interface du substrat.

2. Une méthode d'après la revendication 1,
caractérisée en ce que elle utilise un appareil qui comprend comme source de rayonnement cohérent un laser infrarouge (11), dont la longueur d'ondes est supérieure à 1 »m, qui envoie son rayonnement, selon le cas via un système optique (12) pour corriger le format et l'alignement du faisceau, sur un premier déflecteur optique (13), qui reflète un faible pourcentage vers un détecteur infrarouge à large bande (14), qui mesure avec précision la puissance du laser infrarouge en temps réel, générant un signal analogique ou numérique, et qui est connecté à un circuit interface entre l'analogique et le numérique (15), connecté d'une part à l'unité centrale (16) et d'autre part à l'alimentation en énergie laser (17), bloquant l'alimentation en énergie laser (17) à la valeur spécifiée par l'unité centrale (16), tandis que la partie restante du faisceau passe à travers un second déflecteur (18), via un mirroir scanner Y (19) et un mirroir scanner X (20) pour un positionnement correct du faisceau lors du balayage, des correcteurs de balayage optique (21) pour garder le faisceau fixé à une taille et à un angle constants par rapport au substrat (22), un détecteur infrarouge feed-back (23) recevant le rayonnement infrarouge réfléchi par le substrat chauffé (22) via les correcteurs de balayage optique (21), le mirroir scanner X (20), le mirroir scanner Y (19), le second déflecteur optique (18), le premier déflecteur optique (13) et le mirroir (24), le détecteur infrarouge feed-back (23) générant un signal analogique ou numérique, étant connecté à une autre entrée du circuit interface entre l'analogique et le numérique (15) pour un traitement en temps réel, pour gérer correctement la vitesse de balayage de l'axe qui se déplace le plus rapidement (X ou Y) et/ou pour manipuler la puissance du laser lorsqu'on approche de la limite de l'un ou l'autre des paramètres, un détecteur mesurant la télémétrie (25) connecté avec sa sortie à une troisième entrée du circuit interface entre l'analogique et le numérique (15) recevant son signal du substrat (22) par les correcteurs de balayage optique (21), le mirroir scanner X (20), le mirroir scanner Y (19) et le second déflecteur (18) pour des mesures à distance qui doivent être faîtes avec précision en temps réel, alors que le rayon laser balaie la surface, une caméra infrarouge (26) recevant une image infrarouge du substrat (22) et étant connectée avec un processeur d'image thermique infrarouge (27) qui est relié avec une quatrième entrée du circuit interface entre l'analogique et le numérique (15).

3. Une méthode d'après la revendication 2,
caractérisée en ce que le détecteur mesurant la télémétrie (25) est placé près des correcteurs de balayage optique (21) pour profiler la surface à l'avance (28) et stocker l'information dans une mémoire qui peut être incorporée dans le circuit interface entre l'analogique et le numérique (15), tandis que le second déflecteur optique (18) peut être rendu superflu.

4. Une méthode d'après les revendications 2 ou 3,
caractérisée en ce que un véhicule autopropulsé (30) est présent qui peut être déplacé le long du substrat, possédant une très longue base plate (31), sur laquelle est montée une superstructure (32) possédant plusieurs membres élévateurs (33, 34), qui sont interconnectés par une plateforme châssis (35) qui soutient l'équipement nécessaire à la réalisation de la méthode d'après l'invention.
